# EUROPEAN PATENT SPECIFICATION

(11) **EP 2 684 971 B1**
(45) Date of publication and mention of the grant of the patent: **31.10.2018**
(21) Application number: 12755172.9
(22) Date of filing: 08.03.2012
(51) Int. Cl.: C22B 59/00, B09B 3/00, C22B 7/00, C22B 9/02, C22B 26/22

(54) **APPARATUS AND METHOD FOR RECOVERING RARE EARTH METAL FROM RARE EARTH MAGNET**
VORRICHTUNG UND VERFAHREN ZUR RÜCKGEWINNUNG VON SELTENERDMETALLEN AUS EINEM SELTENERDMAGNET
APPAREIL ET PROCÉDÉ PERMETTANT DE RÉCUPÉRER UN MÉTAL DE TERRES RARES À PARTIR D'UN AIMANT DE TERRES RARES

(30) Priority: 10.03.2011 JP 2011052536
(43) Date of publication of application: 15.01.2014
(73) Proprietor: Hitachi, Ltd., Tokyo 100-8280 (JP); The Foundation for the Promotion of Industrial Science, Tokyo 153-8505 (JP); Toho Titanium CO., LTD., Chigasaki-shi Kanagawa 253-8510 (JP)
(72) Inventor: MIYAMOTO, Yu, Tokyo 100-8280 (JP); OKAMOTO, Masahide, Tokyo 100-8280 (JP); OKABE, Toru, Tokyo 153-8505 (JP); YAMAGUCHI, Masanori, Kanagawa 253-8510 (JP)
(74) Representative: Strehl Schübel-Hopf & Partner
(86) International application number: PCT/JP2012/056032
(87) International publication number: WO 2012/121353

(56) References cited:
- WO-A1-2007/119846
- JP-A- 1 116 038
- JP-A- 2 129 321
- JP-A- 2003 073 754
- JP-A- 2003 113 429
- JP-A- 2004 068 082
- JP-A- 2006 077 264
- US-A- 5 437 709
- Toru H Okabe ET AL: "Direct Extraction and Recovery of Neodymium Metal from Magnet Scrap", , 19 February 2003 (2003-02-19), XP055166787, Retrieved from the Internet: URL:https://www.jim.or.jp/journal/e/pdf3/4 4/04/798.pdf [retrieved on 2015-02-03]
- TAKEDA O ET AL: "Phase equilibria of the system Fe-Mg-Nd at 1076K", JOURNAL OF ALLOYS AND COMPOUNDS, ELSEVIER SEQUOIA, LAUSANNE, CH, vol. 392, no. 1-2, 19 April 2005 (2005-04-19), pages 206-213, XP027812893, ISSN: 0925-8388 [retrieved on 2005-04-19]
- XU L S CHUMBLEY F C LAABS Y: "Liquid metal extraction of Nd from NdFeB magnet scrap", JOURNAL OF MATERIALS RESEARCH, MATERIALS RESEARCH SOCIETY, WARRENDALE, PA, US, vol. 15, no. 11, 15 November 2000 (2000-11-15), pages 2296-2304, XP009182342, ISSN: 0884-2914

## Description

### Technical Field

The present invention concerns a technique of separating and recovering a rare earth metal from a rare earth magnet.

### Background Art

The background art in the field of the present technique includes a molten metal extraction method described in Non-Parent Literature 1. Molten magnesium (Mg) or silver (Ag) has a property of dissolving mainly RE in a rare earth magnet RE-Fe-B (RE represents a rare earth metal such as Nd, Pr, or Dy) and not dissolving a Fe-B alloy. The molten metal extraction method is a method of utilizing the property and heating Mg or Ag to a temperature higher than the melting point to convert Mg or Ag into liquid (molten metal), and extracting mainly RE from the magnet into the molten metal by direct contact of the molten metal with the rare earth magnet. Different from a wet process such as solvent extraction + molten salt electrolysis applied in the recycle of magnet grinding wastes generated in magnet production steps, since this is a dry process, it is expected as a rare earth metal recovery process giving less environmental load and at a low cost.

### Citation List

### Non-Patent Literature

Non-Patent Literature 1: Materials Transactions, 2003, Vol. 44, No. 4, p. 798-801

### Summary of Invention

### Technical Problem

The Non-Patent Literature 1 describes a configuration of an apparatus capable of simultaneously realizing extraction of a rare earth metal from a rare earth magnet by using the molten metal extraction method and separation of magnesium containing extracted rare earth metal and residual ingredient Fe-B alloy of the rare earth magnet after extraction of the rare earth metal. However, while the apparatus for separating the rare earth magnet from the rare earth magnet of the Non-Patent Literature 1 can use solid matters of the rare earth magnet as the starting material, it cannot use a powder of the rare earth magnet as the starting material. Further, the apparatus can only extract the rare earth metal from the rare earth magnet and separate the magnesium containing the extracted rare earth metal and the residual ingredient Fe-B alloy of the rare earth magnet after extraction of the rare earth metal, and an apparatus for separating the rare earth metal from the magnesium containing the extracted rare earth metal has to be provided separately. Further, magnesium cannot be recovered and re-utilized.

Then, the present invention intends to provide a recovery apparatus and a recovery method of a rare earth metal from a rare earth magnet capable of using a powder in addition to a solid of the rare earth magnet as the starting material, capable of simultaneously realizing separation of the rare earth metal from magnesium containing the extracted rare earth metal in addition to extraction of the rare earth metal from the rare earth magnet and separation of magnesium containing the extracted rare earth metal and the residual ingredient Fe-B alloy of the rare earth magnet after extraction of the rare earth metal and capable of recovering and reutilizing the separated magnesium.

### Solution to Problem

For attaining the purpose described above, the present invention provides the apparatus and the method as defined in the independent claims. The dependent claims relate to preferred embodiments. Disclosed as an exemple useful to understand the invention is a rare earth metal recovery apparatus for recovering a rare earth metal from a rare earth magnet comprising a reaction vessel for extracting a rare earth metal from a magnet having the rare earth metal by using molten magnesium, a first vessel for accommodating the reaction vessel, a separation unit for separating the magnet from which the rare earth metal has been extracted and liquid magnesium having the rare earth metal dissolved therein, a rare earth metal recovery unit for recovering the rare earth metal from liquid magnesium containing the separated rare earth metal by evaporating magnesium, and a second vessel for recovering the evaporated magnesium by condensation, liquefication, or solidification.

Further, in the rare earth metal recover apparatus or method of the invention, the magnet may be either scraps generated in a rare earth magnet manufacturing step or waste magnets taken out of waste products. The waste products include, for example, motors of hard disk drives, domestic electric products and industrial products, motors of compressors, hybrid cars, plug-in hybrid cars, electric cars, and motors of electromotive power steerings of cars.

### Advantageous Effects of Invention

According to the invention, a recovery apparatus and a recovery method of a rare earth metal capable of utilizing solid and powder of a rare earth metal as the starting material can be provided. Further, a recovery apparatus and a recovery method of a rare earth metal from a rare earth magnet capable of simultaneously realizing separation of the rare earth metal from magnesium containing the extracted rare earth metal in addition to extraction of the rare earth metal from the rare earth magnet and separation of magnesium containing the extracted rare earth metal and the residual ingredient Fe-B alloy of the rare earth magnet after extraction of the rare earth metal and capable of recovering and re-utilizing the separated magnesium can be provided. Further, since the purity of the separated magnesium is improved more than that in the charged magnesium, charged magnesium can be purified.

### Brief Description of Drawings

Fig. 1 is a schematic view of a rare earth metal recovery apparatus according to a first embodiment which does not form part of the invention but represents background art useful for understanding the invention.
Fig. 2A is a schematic view for a portion of a rare earth recovery method according to the first embodiment.
Fig. 2B is a schematic view for a portion of a rare earth recovery method according to the first embodiment.
Fig. 2C is a schematic view for a portion of a rare earth recovery method according to the first embodiment.
Fig. 2D is a schematic view for a portion of a rare earth recovery method according to the first embodiment.
Fig. 2E is a schematic view for a portion of a rare earth recovery method according to the first embodiment.
Fig. 3 is a schematic view of a rare earth metal recovery apparatus according to a second embodiment of the invention.
Fig. 4A is a schematic view for a portion of a rare earth metal recovery method according to the second embodiment of the invention.
Fig. 4B is a schematic view for a portion of a rare earth metal recovery method according to the second embodiment of the invention.
Fig. 4C is a schematic view for a portion of a rare earth metal recovery apparatus according to the second embodiment of the invention.
Fig. 4D is a schematic view for a portion of a rare earth metal recovery method according to the second embodiment of the invention.
Fig. 4E is a schematic view for a portion of a rare earth metal recovery method according to the second embodiment of the invention.
Fig. 4F is a schematic view for a portion of a rare earth metal recovery method according to the second embodiment of the invention.

### Description of Embodiments

Embodiments of the present invention are to be described with reference to drawings. Throughout the drawings for explaining the embodiments, identical members carry same references, as a rule, for which duplicate descriptions are to be omitted.

### First Embodiment

This embodiment does not form part of the invention but represents background art useful to understand the invention.

This embodiment describes examples of an apparatus and a method for recovering a rare earth metal from a rare earth magnet and also recovering magnesium used for extraction of the rare earth metal from the rare earth metal magnet.

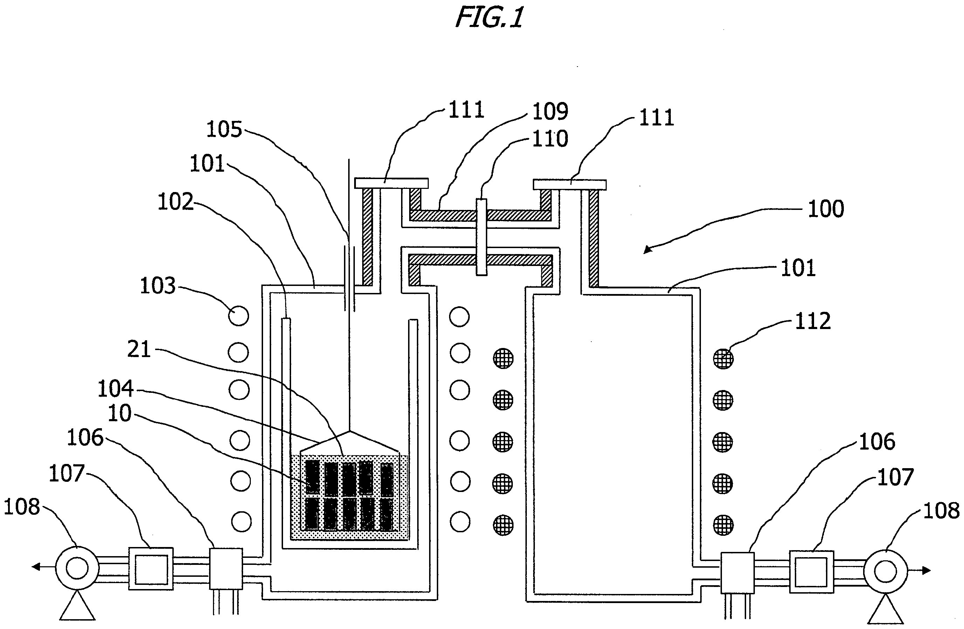

Fig. 1 is a configurational view of a rare earth metal recovery apparatus according to this embodiment. A rare earth metal recovery apparatus 100 has a tightly closed vessel 101 made of iron or iron alloy, a reaction vessel 102 made of iron or iron alloy lined with tantalum or molybdenum, a heating heater 103, a cage 104 made of iron or iron alloy, a vertical moving mechanism 105 for the cage,
an evacuation/gas introduction/closure switching valve 106, a filter 107, a vacuum pump 108, a sheath heater 109, an inter-vessel on-off valve 110, a vessel top on-off valve 111, and a cooling device 112. The tightly closed vessel 101 is made of iron or iron alloy since iron scarcely reacts with magnesium 20 or 21. The cage 104 is made of iron or iron alloy by the same reason. The reaction vessel 102 is made of iron or iron alloy lined with tantalum or molybdenum since tantalum or molybdenum does not react with rare earth metal 12 at a low temperature to form an alloy. The reaction vessel 102 is not entirely made of tantalum or molybdenum for using the same only at the inner surface of the reaction vessel 102 in direct contact with the rare earth metal 12 in order to provide the reaction vessel 102 with strength and minimize the amount of use of expensive tantalum or molybdenum, but the entire reaction vessel 102 may also be made of tantalum or molybdenum.

At first, a rare earth magnet 10 and magnesium 20 or 21 are disposed in the reaction vessel 102 made of iron or iron alloy lined with tantalum or molybdenum. The rare earth magnet 10 may be either a solid or powdery form. However, if this is in the solid form, a cage 104 made of iron or iron alloy with a mesh size smaller than the size of the rare earth magnet 10 is used so that the rare earth magnet 10 does not fall downward through the cage 104 made of iron or iron alloy. Also in the case where the rare earth magnet 10 is in the powdery form, a cage 104 made of an iron or iron alloy having a fine mesh size smaller than the size of the rare earth magnet is used. In this case, only the bottom of the cage 104 made of iron or iron alloy is formed of a net or a sieve of fine mesh size made of iron or iron alloy and the lateral side may be formed as a cylinder with no apertures made of iron or iron alloy. The rare earth magnet 10 may be either scraps generated in a rare earth magnet manufacturing step or waste magnets taken out of waste products. The waste products include, for example, motors of hard disk drives, domestic electric products and industrial products, motors of compressors, hybrid cars, plug-in hybrid cars, electric cars, etc.

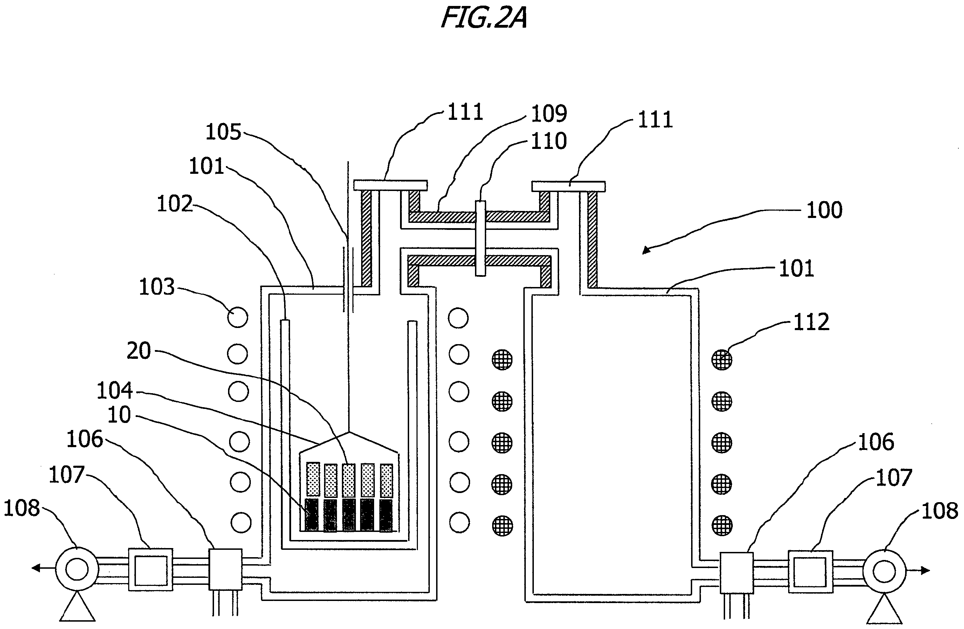

Fig. 2A is a schematic view illustrating a portion of the rare earth metal recovery method of this embodiment. A rare earth magnet 10 and magnesium (solid) 20 are placed in a cage 104 made of iron or iron alloy. After closing an inter-vessel on-off valve 110 and a vessel top on-off valve 111, switching an evacuation/gas introduction/closure switching valve 106 to the side of a vacuum pump 108, and evacuating the inside of a tightly closed reaction vessel 101 made of iron or iron alloy on the left, the gas introduction/closure switching valve 106 is switched to the side of gas introduction and an Ar gas is introduced. After reaching 1 atm, the vessel top on-off valve 111 is opened and the inside of the tightly closed reaction vessel 101 made of iron or iron alloy on the left is sufficiently replaced with Ar gas. While keeping the gas introduction/closure switching valve 106 and the vessel top on-off valve 111 open as they are, the Ar gas is supplied continuously, and only the portion below the heating heater 103 is heated in an Ar gas stream. Instead of using the Ar gas stream, after sufficiently replacing the inside of the tightly closed reaction vessel 101 made of iron or iron alloy on the left with the Ar gas, the vessel top on-off valve 111, and the gas introduction/closure switching valve 106 are closed in this order to provide a tightly closed Ar atmosphere state.

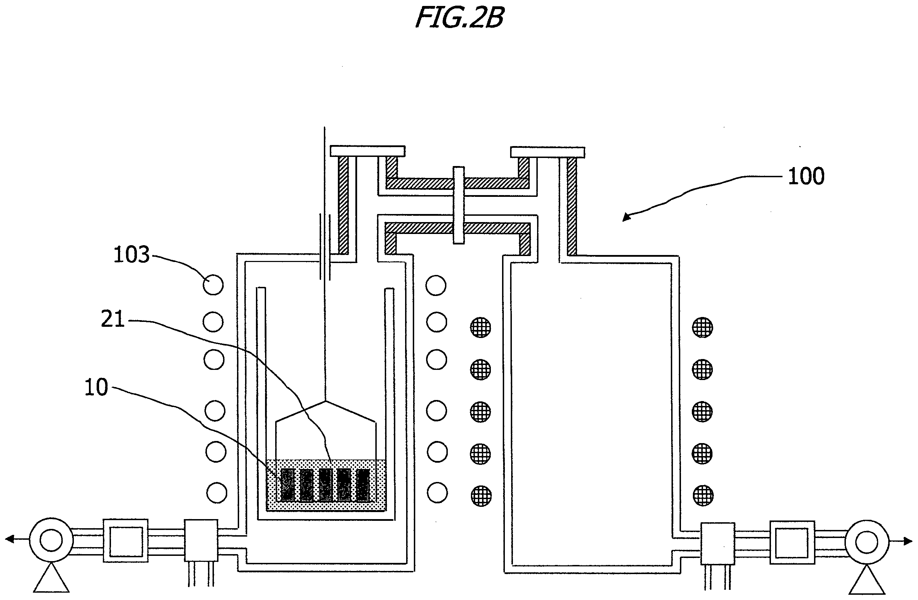

Fig. 2B is a schematic view illustrating a portion of the rare earth metal recovery method of this embodiment. By heating the portion of magnesium (solid) 20 a temperature of 650°C or higher and 800°C or lower only for a lower portion to the heating heater 103, magnesium (solid) 20 is melted into magnesium (liquid) 21, and the rare earth magnet 10 is immersed in magnesium (liquid) 21. The temperature is set to 650°C or higher since the melting point of magnesium is 650°C. The temperature is set to 800°C or lower for suppressing evaporation of magnesium (liquid) 21.

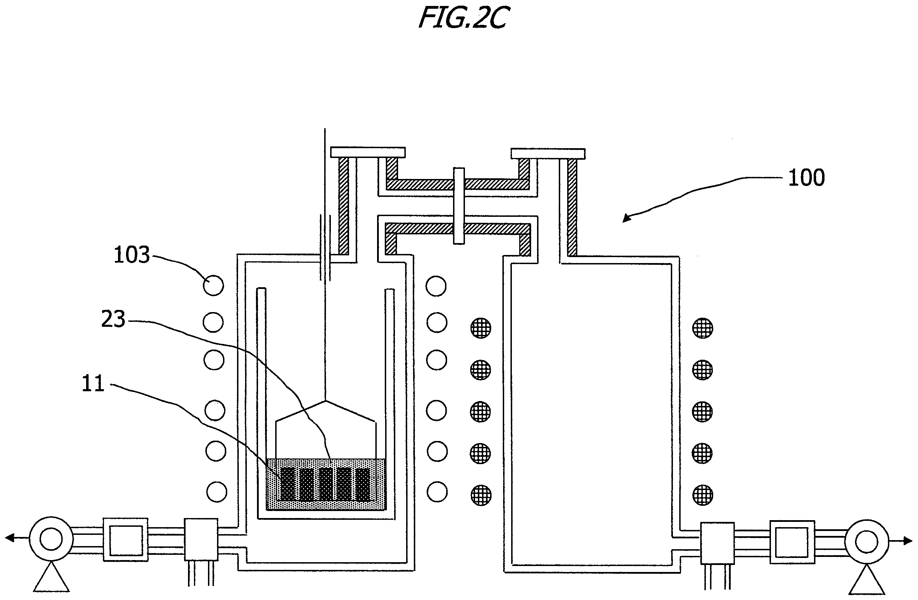

Fig. 2C is a schematic view illustrating a portion of the rare earth metal recovery method of this embodiment. When the rare earth magnet 10 is in contact with magnesium (liquid) 21 at a temperature of 650°C or higher and 800 °C or lower, rare earth metal ingredients of the rare earth magnet 10 are migrated (extracted) to magnesium (liquid) 21. As a result, the rare earth magnet 10 forms an alloy 11 comprising iron and boron as main ingredients and magnesium (liquid) 21 forms a magnesium-rare earth metal alloy 23. The extraction time for the rare earth metal is different depending on the shape of the rare earth magnet 10, which is defined as a time in which the rare earth metal is extracted sufficiently from the rare earth magnet 10.

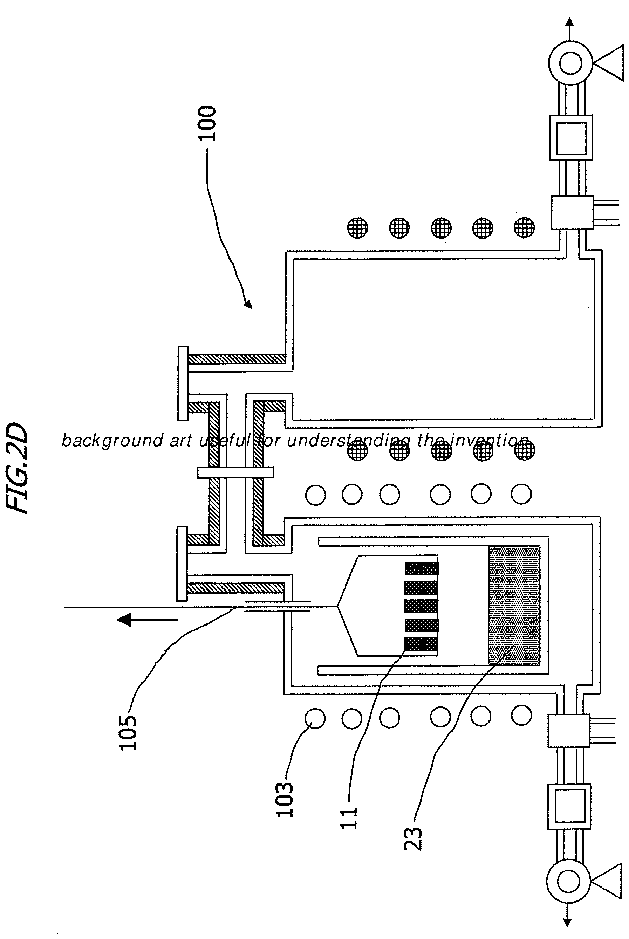

Fig. 2D is a schematic view illustrating a portion of the rare earth metal recovery method of this embodiment.

After sufficient extraction of the rare earth metal, a vertical moving mechanism 105 for the cage is actuated to lift a cage 104 made of iron or iron alloy and an alloy 11 comprising iron and boron as main ingredients to a position not in contact with the magnesium-rare rare earth metal alloy 23. In this step, as upper portion to the heating heater is heated to 650°C or higher so that the magnesium-rare earth metal alloy 23 deposited to the cage 104 made of iron or iron alloy and the alloy 11 comprising iron and boron as the main ingredients forms a liquid. Thus, deposited magnesium-rare earth metal alloy 23 drips downward and the amount of the rare earth metal which would remain on the cage 104 made of iron or iron alloy and the alloy 11 comprising iron and boron as the main ingredients can be decreased.

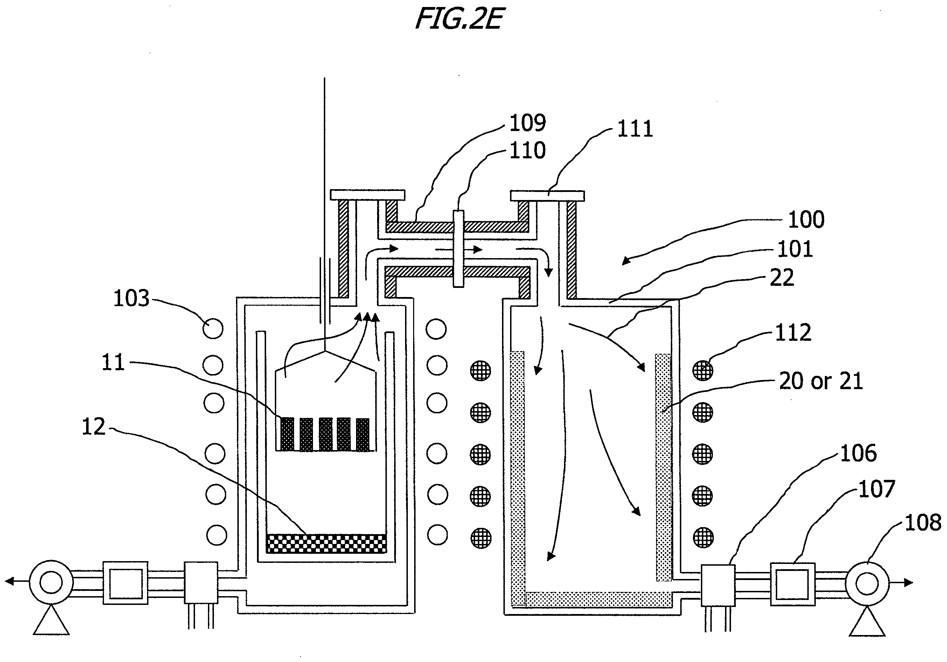

Fig. 2E is a schematic view illustrating a portion of the rare earth metal recovery method of this embodiment. A vessel top on-off valve 111 of a tightly closed reaction vessel 101 made of iron or iron alloy on the right is closed, a gas introduction/closure switching valve 106 on the right is switched on the side of a vacuum pump 108, and the inside of the tightly closed reaction vessel 101 made of iron or iron alloy on the right is evacuated. Then, a heating heater 103 of the vessel on the left is heated such that the temperature of the magnesium-rare earth metal alloy 23 in the reaction vessel 102 made of iron or iron alloy lined with tantalum or molybdenum is 650°C or higher and 930°C or lower. Further, heating is applied by using the upper portion of the heating heater 103 and a sheath heater 109 so that magnesium (gas) 22 evaporated from the magnesium-rare earth metal alloy 23 is not deposited again to the upper portion in the vessel on the left and the inside of the pipeline above the vessel before transfer to the vessel on the right. Successively, an inter-vessel on-off valve 110 is opened. Thus, only magnesium in the magnesium-rare earth metal alloy 23 in the reaction vessel 102 made of iron or iron alloy lined with tantalum or molybdenum is evaporated as magnesium (gas) 22 and transfers to a tightly closed reaction vessel 101 made of iron or iron alloy on the right. The transferred magnesium (gas) 22 is cooled by a cooling device 112 into magnesium (liquid) 21 or magnesium (solid) 20 and recovered.

The heating temperature of the magnesium-rare earth metal alloy 23 is set to 650°C or higher since the melting point of magnesium is 650°C. The temperature is set to 930°C or lower for suppressing evaporation of praseodymium since the melting point of praseodymium is 931°C. When a rare earth magnet not containing praseodymium is used, the heating temperature may be increased up to 1023°C since the melting point of neodymium is 1024°C. By providing a filter 107 between the gas introduction/closure switching valve 106 and the vacuum pump 108 on the right, transfer of magnesium to the vacuum pump can be prevented.

Finally, materials can be separated and recovered in three forms, that is, the rare earth metal 12 in the reaction vessel 102 made of iron or iron alloy lined with tantalum or molybdenum, the alloy 11 comprising iron and boron as the main ingredients in the cage 104 made of iron or iron alloy, and magnesium (solid) 20 in the tightly closed reaction vessel 101 made of iron or iron alloy on the right. Magnesium (solid) 20 in the tightly closed reaction vessel 101 made of iron or iron alloy on the right can be re-utilized.

In this embodiment, since extraction of the rare earth metal from the magnet by magnesium, separation of magnesium having the rare earth metal dissolved therein and the iron-boron alloy, and separation of the rare earth metal and magnesium from magnesium having the rare earth metal dissolved therein (magnesium recovery) are configured by an integral type apparatus, impurities in magnesium recovered finally can be minimized making it possible to use magnesium repeatingly.

As a result of this embodiment, a rare earth metal comprising Nd, Pr, and Dy (99% purity) was obtained as the rare earth metal 12 in the reaction vessel 102 made of iron or iron alloy lined with tantalum or molybdenum. The recovery ratio of the rare earth metal from the charged rare earth metal 10 was 85%.

Fe impurities, if remain somewhat, in the recovered rare earth metal alloy, since the alloy is used as the raw material for rare earth metal for manufacturing Nd-Fe-B magnets, they provide no particular problem.

Further, while the purity of the charged magnesium was 98%, the purity of the recovered magnesium was 99.8%.

### Second Embodiment

In this embodiment, examples of an apparatus and method for recovering a rare earth metal from a rare earth magnet semi-continuously is to be described.

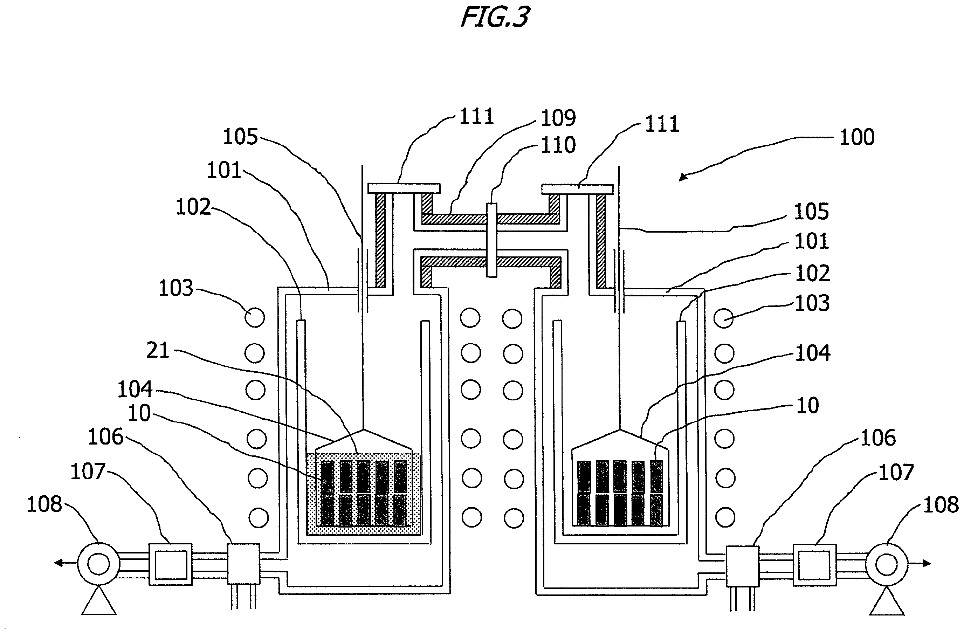

Fig. 3 is a configurational view of a rare earth metal recovery apparatus of this embodiment.

This has a configuration similar to that of the rare earth metal recovery apparatus of the first embodiment (Fig. 1). A configuration for left-half of the first embodiment is applied also to the right-half. That is, the apparatus has a right to left symmetrical configuration.

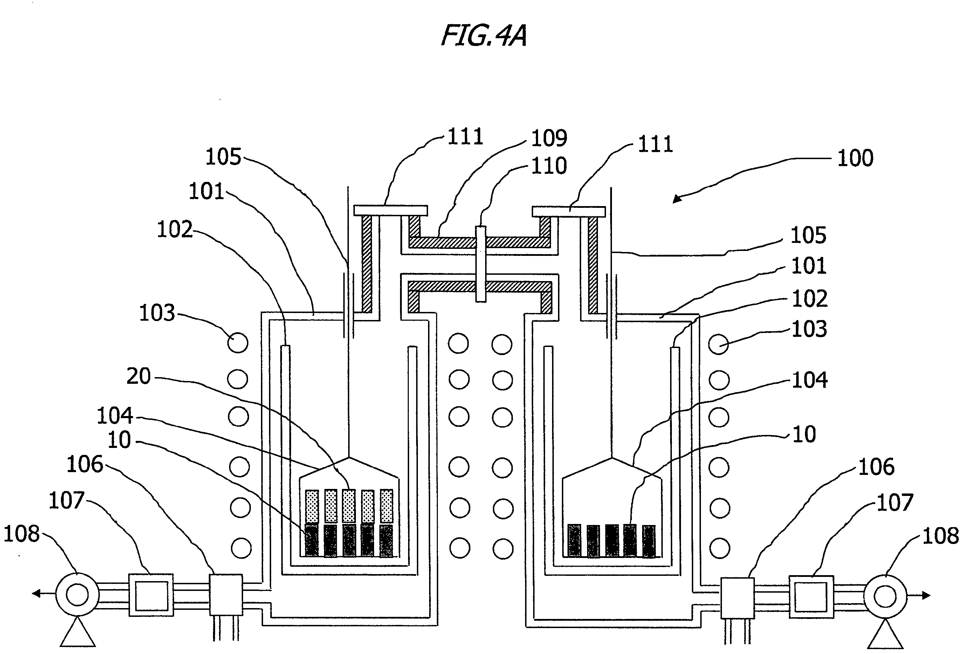

Fig. 4A is a schematic view illustrating a portion of a rare earth metal recovery method of this embodiment.

A rare earth magnet 10 and magnesium (solid) 20 are placed in a cage 104 made of iron or iron alloy on the left (on one side), and a rare earth magnet 10 is placed in a cage 104 made of iron or iron alloy on the right (the other side). An inter-vessel on-off valve 110 and a vessel top on-off valve 111 are closed, an evacuation/gas introduction/closure switching valve 106 is switched to a vacuum pump 108, and the insides of a tightly closed reaction vessels 101 made of iron or iron alloy on the right and left are evacuated respectively.

Subsequently, the gas introduction/closure switching valve 106 on the left is switched to the gas introduction side and, an Ar gas is introduced. After reaching 1 atm, the vessel top on-off value 111 on the left is opened and the inside of the tightly closed reaction vessel 101 made of iron or iron alloy on the left is sufficiently replaced with an Ar gas. While keeping the gas introduction/closure switching valve 106 and the vessel top on-off valve 111 open as they are, an Ar gas is supplied continuously and only the lower portion of a heating heater 103 on the left is heated in Ar gas stream. Instead of using the Ar gas stream, after sufficiently replacing the inside of the tightly closed reaction vessel 101 made of iron or iron alloy on the left with an Ar gas, the vessel top on-off valve 111 and the gas introduction/closure switching valve 106 are closed in this order to provide a tightly sealed Ar atmosphere.

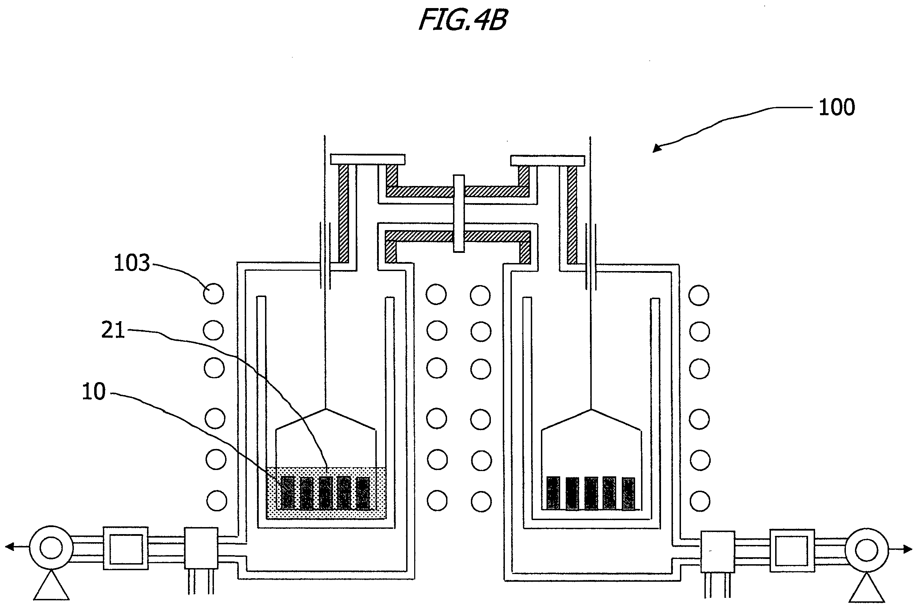

Fig. 4B is a schematic view illustrating a portion of the rare earth metal recovery method of this embodiment. The step is identical with that of the first embodiment (Fig. 2B).

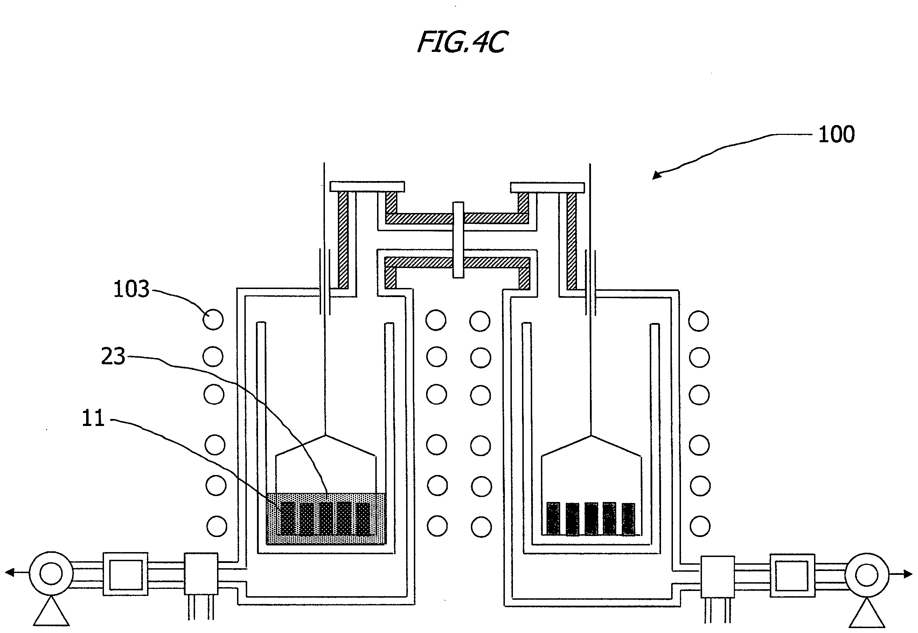

Fig. 4C is a schematic view illustrating a portion of a rare earth metal recovery method of this embodiment. The step is identical with that of the first embodiment (Fig. 2C).

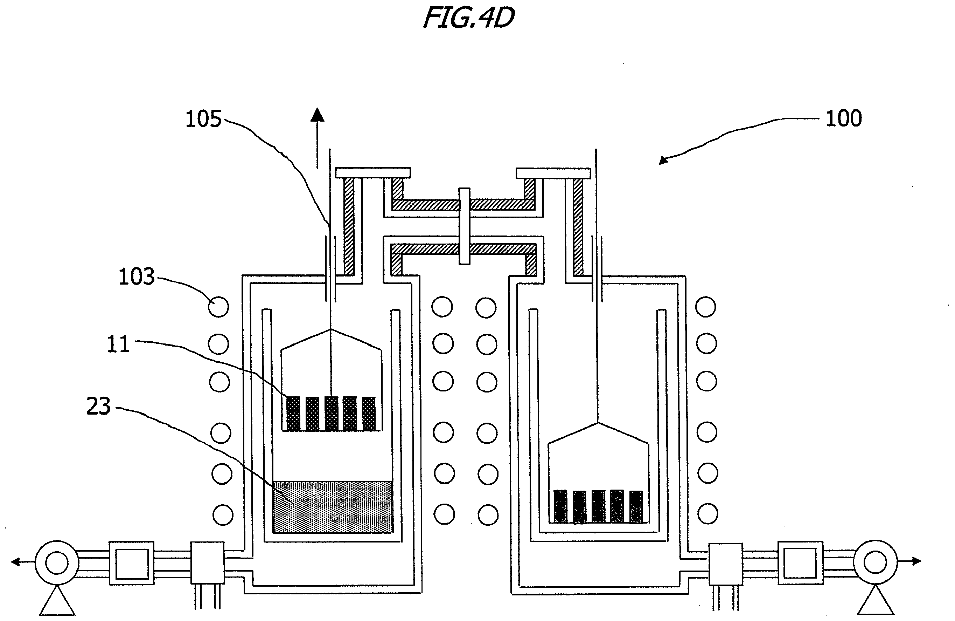

Fig. 4D is a schematic view illustrating a portion of the rare earth metal recovery method of this embodiment. The step is identical with that first embodiment (Fig. 2D)

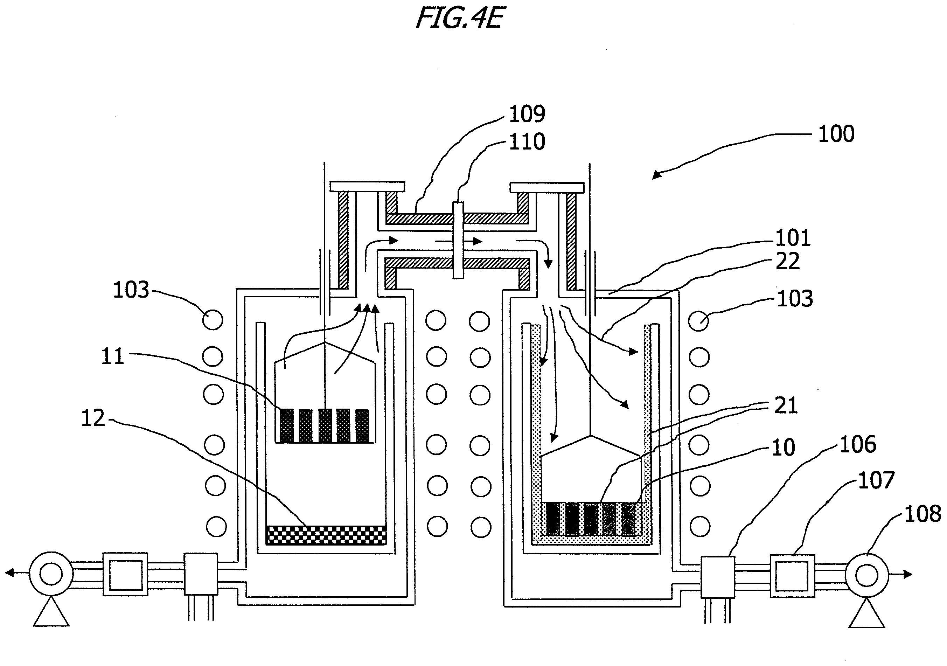

Fig 4E is a schematic view illustrating a portion of the rare earth recovery method of this embodiment.

A heating heater 103 of a vessel on the left is heated such that the temperature of magnesium-rare earth metal alloy 23 in a reaction vessel 102 made of iron or iron alloy is 650°C or higher and 930°C or lower. Further, heating is applied to the upper portion of the heating heater 103 and a sheath heater 109 so that magnesium (gas) 22 evaporated from the magnesium-rare earth metal alloy 23 is not deposited again to the upper portion in the vessel on the left and to the inside of the pipeline above the vessel before transfer to the vessel on the right. Successively, an inter-vessel on-off valve 110 is opened. Thus, only magnesium in the magnesium-rare earth metal alloy 23 in the reaction vessel 102 made of iron or iron alloy lined with tantalum or molybdenum is evaporated into magnesium (gas) 22 and transfers to a tightly closed reaction vessel 101 made of iron or iron alloy on the right.

A heating heater 103 on the right is previously heated to 650°C or higher. The transferred magnesium (gas) 22 is cooled into liquid in a reaction vessel 102 made of iron or iron alloy lined with tantalum or molybdenum on the right, and stagnates in the lower portion, in which the rare earth magnet 10 is immersed in magnesium (liquid) 21.

In this step, the heating temperature of the magnesium-rare earth metal alloy 23 is set to 650°C or higher since the melting point of magnesium is 650°C. The temperature is set to 930°C or lower for suppressing evaporation of praseodymium since the melting point of praseodymium is 931°C. When a rare earth magnet not containing praseodymium is used, the heating temperature may be increased up to 1023°C since the melting point of neodymium is 1024°C. Magnesium can be prevented from flowing to the vacuum pump by providing a filter 107 between a gas introduction/closure switching valve 106 and a vacuum pump 108 on the right.

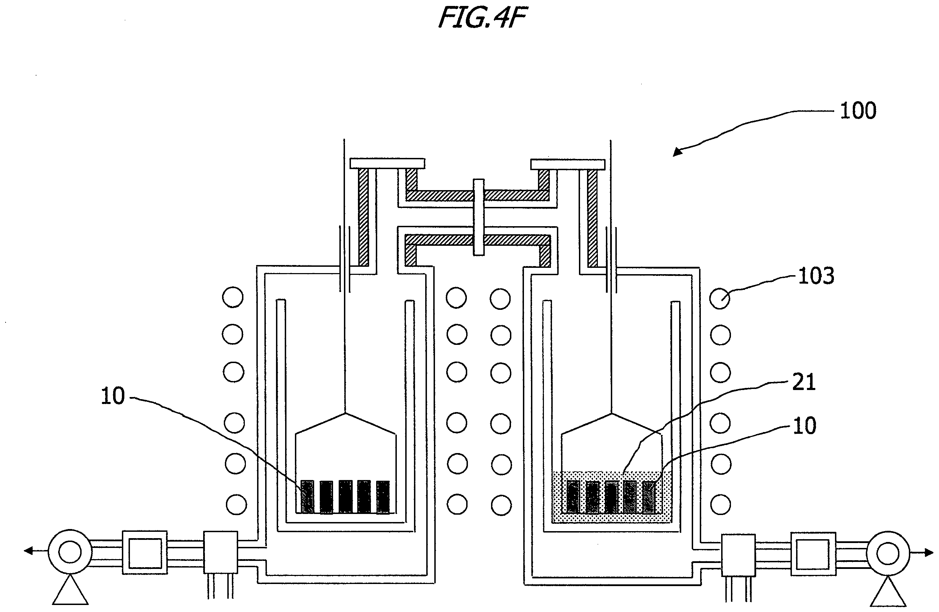

Fig. 4F is a schematic view illustrating a portion of a rare earth metal recovery method of this embodiment. After sufficient transfer of magnesium to a tightly closed reaction vessel 101 made of iron or iron alloy on an right, the inter-vessel on-off valve 110 is closed, the inside of a tightly closed reaction vessel 101 made of iron or iron alloy on the right is replaced with an Ar gas to provide a state in an Ar gas stream or in tightly closed state of an Ar atmosphere. A tightly closed reaction vessel 101 made of iron or iron alloy on the left is opened from which the rare earth metal 12 and the alloy 11 comprising iron and boron as main ingredients are taken out and recovered. Then, a new rare earth magnet 10 is set as illustrated in Fig. 4F and the inside is evacuated. Thus, the state returns to that in Fig. 4B while being reversed right to left. When the process is repeated, rare earth metal can be recovered semi-continuously from the rare earth magnet.

As a result of this embodiment, rare earth metal comprising Nd, Pr, and Dy (98% purity) was obtained as the rare earth metal 12 in the reaction vessel 102 made of iron or iron alloy lined with tantalum or molybdenum by the first operation. The recovery ratio of the rare earth metal from the charged rare earth magnet 10 was 95%. Further, while the purity of the charged magnet was 98%, the purity of the received magnesium was 99.8%. Rare earth metal comprising Nd, Pr, and Dy (95% purity) was obtained as the rare earth metal 12 in the inside of the reaction vessel 102 made of iron or iron alloy lined with tantalum and molybdenum by the second operation. The recovery ratio of the rare earth metal from the charged rare earth magnet 10 was 87%. Further, while magnesium recovered by the first operation (99.8% purity) was used, the purity of the recovered magnesium was 99.9%.

### Reference Sings List

10 rare earth magnet
11 alloy comprising iron and boron as main ingredients
12 rare earth metal
20 magnesium (solid)
21 magnesium (liquid)
22 magnesium (gas)
23 magnesium-rare earth metal alloy
100 rare earth metal recovery apparatus
101 tightly closed vessel made of iron or iron alloy
102 reaction vessel made of iron or iron alloy lined with tantalum or molybdenum
103 heating heater
104 cage made of iron or iron alloy
105 vertical movement mechanism for cage
106 evacuation/gas introduction/closure switching valve
107 filter
108 vacuum pump
109 sheath heater
110 inter-vessel on-off valve
111 vessel top on-off valve
112 cooling device

## Claims

1. A rare earth metal recovery apparatus (100) for recovering a rare earth metal (12) from a rare earth magnet (10) comprising:
a first reaction vessel (102) for extracting a rare earth metal (12) from a magnet (10) having the rare earth metal (12) by using molten magnesium (21),
a first vessel (101) for accommodating the first reaction vessel (102),
a first separation unit for separating the magnet (10) from which the rare earth metal (12) has been extracted and liquid magnesium (21) having the rare earth metal (12) dissolved therein,
a second reaction vessel (102) for extracting a rare earth metal (12) from a magnet (10) having the rare earth metal (12) by using molten magnesium (21),
a second vessel (101) for accommodating the second reaction vessel (102),
a second separation unit for separating the magnet (10) from which the rare earth element has been extracted and liquid magnesium (21) having the rare earth elements dissolved therein, and
a rare earth element recovery unit for recovering the rare earth metal (12) from the liquid magnesium (21) containing the separated rare earth metal (12) in the first reaction vessel (102) or the second reaction vessel (102), in which
the evaporated magnesium (22) is transferred to another vessel (102) different from the vessel that accommodates the first reaction vessel (102) or the second reaction vessel (102) which contains the liquid magnesium (21) containing the separated rare earth metals, and condensed, liquefied, or solidified in the different vessel (102), thereby recovering the evaporated magnesium (22).

2. The rare earth metal recovery apparatus (100) according to claim 1, wherein the first separation unit, and the second separation unit is a mechanism (105) for vertically moving a cage (104) made of iron or iron alloy containing the magnet (10) between a position where the magnet (10) is completely immersed in molten magnesium (21) in the first reaction vessel (102), or the second reaction vessel (102) and a position where the cage (104) made of iron or iron alloy is not immersed at all in the molten magnesium (21).

3. The rare earth metal recovery apparatus (100) according to claim 1 or 2, wherein the first vessel (101) and the second vessel (101) are connected to each other by way of a pipeline, and an on-off valve (110) is provided to the inside of the pipeline.

4. The rare earth metal recovery apparatus (100) according to claim 3, wherein each of the first vessel (101) and the second vessel (101) is a tightly closed vessel and having a mechanism of providing an argon atmosphere or evacuation in the inside of the first vessel (101) and the second vessel (101) separately or at the same time by opening the on-off valve (110).

5. The rare earth metal recovery apparatus (100) according to any one of claims 1 to 4, wherein
each of the first vessel (101) and the second vessel (101) is made of iron or iron alloy, and/or
each of the first reaction vessel (102) and the second reaction vessel (102) is made of tantalum or molybdenum, or made of iron or iron alloy coated with tantalum or molybdenum at the inner surface of the vessel (102).

6. A method of recovering a rare earth metal (12) from a rare earth magnet (10) comprising:
an extraction step of extracting the rare earth metal (12) from a magnet (10) having a rare earth metal (12) into molten liquid magnesium (21),
a separation step of separating the magnet (10) from which the rare earth metal (12) has been extracted and liquid magnesium (21) having the rare earth metal (12) dissolved therein,
a rare earth metal recovery step of recovering the rare earth metal (12) from the liquid magnesium (21) containing the separated rare earth metal (12) by evaporation of magnesium (22), and
a magnesium recovery step of recovering the evaporated magnesium (22) by condensation, liquefication, or solidification,
wherein the extraction step is performed by placing the magnet (10) in a cage (104) made of iron or iron alloy and locating the cage (104) such that the entire magnet (10) is immersed in molten magnesium (21) in the reaction vessel (102) and, subsequently, elevating the cage (104) to a position not in contact at all with molten magnesium (21) having the rare earth metal (12) dissolved therein, thereby separating the magnet (10) from which the rare earth metal (12) has been extracted and liquid magnesium (21) having the rare earth metal (12) dissolved therein in the separation step.

7. The method of claim 6, wherein the evaporated magnesium (22) is recovered in another reaction vessel (102) containing another magnet (10) by condensation, liquefication, or solidification and, successively, the extraction step is performed, thereby continuously recovering the rare earth metal (12) from the magnet (10).

8. The method of claim 6 or 7, wherein the extraction step is performed in an argon atmosphere in the inside of a reaction vessel (102) made of tantalum or molybdenum or made of iron or iron alloy coated with tantalum or molybdenum at the inner surface of the vessel (102).

9. The method of any one of claims 6 to 8, wherein
the rare earth metal extraction reaction is performed at a temperature of 650°C or higher and 800°C or lower, and/or
the separation step is performed in an argon atmosphere at a temperature of 650°C or higher, and/or
magnesium is evaporated at a temperature of 650°C or higher and 930°C or lower in the magnesium recovery step and the rare earth metal recovery step.

10. The method of any one of claims 6 to 9, wherein magnesium is evaporated from the liquid magnesium (21) containing the separated rare earth metal (12) by evacuation from the side of another vessel (102), transferring the same to the other vessel (102), recovering magnesium by condensation, liquefication, or solidification, and remaining only the rare earth metal (12) in the reaction vessel (102) and recovering the same in the rare earth metal recovery step and the magnesium recovery step.

11. The method of any one of claims 6 to 10, wherein all of the steps described above are performed in two tightly closed reaction vessels (102) made of iron or iron alloy connected to each other by way of a pipeline and having an on-off valve (110) in the inside of the pipeline.

12. The apparatus (100) of any of claims 1 to 5, wherein
the magnet (10) contains iron, boron, and a rare earth metal (12), and
the rare earth metal (12) contains at least one of Nd, Pr, and Dy.

13. The method of any of the claims 6 - 11, wherein the magnet (10) contains iron, boron, and a rare earth metal (12), and the rare earth metal (12) contains at least one of Nd, Pr, and Dy.

14. The apparatus (100) of any of claims 1 to 5, wherein the magnet (10) is in a solid or a powdery form

15. The method of any of the claims 6-11 and 13, wherein the magnet (10) is in a solid or a powdery form.

## Patentansprüche

1. Seltenerdmetall-Rückgewinnungsgerät (100) zum Rückgewinnen eines Seltenerdmetalls (12) aus einem Seltenerdmagneten (10), mit
einem ersten Reaktionsgefäß (102) zum Extrahieren eines Seltenerdmetalls (12) aus einem Magneten (10) mit dem Seltenerdmetall (12) durch Verwendung von geschmolzenem Magnesium (21),
einem ersten Gefäß (101) zum Aufnehmen des ersten Reaktionsgefäßes (102),
einer ersten Trenneinheit zum Trennen des Magneten (10), aus dem das Seltenerdmetall (12) extrahiert wurde, und des flüssigen Magnesiums (21), in dem das Seltenerdmetall (12) aufgelöst ist,
einem zweiten Reaktionsgefäß (102) zum Extrahieren eines Seltenerdmetalls (12) aus einem Magneten (10) mit dem Seltenerdmetall (12) durch Verwendung von geschmolzenem Magnesium (21),
einem zweiten Gefäß (101) zum Aufnehmen des zweiten Reaktionsgefäßes (102),
einer zweiten Trenneinheit zum Trennen des Magneten (10), aus dem das Seltenerdmetall extrahiert wurde, und des flüssigen Magnesiums (21), in dem die Seltenerdelemente aufgelöst sind, und
einer Seltenerdelement-Rückgewinnungseinheit zum Rückgewinnen des Seltenerdmetalls (12) aus dem das getrennte Seltenerdmetall (12) enthaltenden flüssigen Magnesium (21), in dem ersten Reaktionsgefäß (102) oder dem zweiten Reaktionsgefäß (102), wobei
das verdampfte Magnesium (22) zu einem anderen Gefäß (102) geleitet wird, das verschieden von dem Gefäß ist, das das erste Reaktionsgefäß (102) oder das zweite Reaktionsgefäß (102) aufgenommen hat, das das die getrennten Seltenerdmetalle enthaltende flüssige Magnesium (21) enthält, und in dem verschiedenen Gefäß (102) kondensiert, verflüssigt oder verfestigt wird, wodurch das verdampfte Magnesium (22) rückgewonnen wird.

2. Seltenerdmetall-Rückgewinnungsgerät (100) nach Anspruch 1, wobei die erste Trenneinheit und die zweite Trenneinheit in einem Mechanismus (105) zum vertikalen Bewegen eines Käfigs (104) aus Eisen oder einer Eisenlegierung, der den Magneten (10) enthält, zwischen einer Position, in der der Magnet (10) vollständig in das geschmolzene Magnesium (21) in dem ersten Reaktionsgefäß (102) oder dem zweiten Reaktionsgefäß (102) eingetaucht ist, und einer Position, in der der Käfig (104) aus Eisen oder der Eisenlegierung überhaupt nicht in das geschmolzene Magnesium (21) eingetaucht ist, besteht.

3. Seltenerdmetall-Rückgewinnungsgerät (100) nach Anspruch 1 oder 2, wobei das erste Gefäß (101) und das zweite Gefäß (101) miteinander über eine Pipeline verbunden sind, und innerhalb der Pipeline ein An-Aus-Ventil (110) vorgesehen ist.

4. Seltenerdmetall-Rückgewinnungsgerät (100) nach Anspruch 3, wobei sowohl das erste Gefäß (101) als auch das zweite Gefäß (101) ein fest verschlossenes Gefäß ist und einen Mechanismus zum Bereitstellen einer Argon-Atmosphäre oder einer Evakuierung im Inneren des ersten Gefäßes (101) und des zweiten Gefäßes (101) separat oder gleichzeitig durch Öffnen des An-Aus-Ventils (110) bereitstellt.

5. Seltenerdmetall-Rückgewinnungsgerät (100) nach einem der Ansprüche 1 bis 4, wobei
sowohl das erste Gefäß (101) als auch das zweite Gefäß (101) aus Eisen oder einer Eisenlegierung hergestellt ist, und/oder
sowohl das erste Reaktionsgefäß (102) als auch das zweite Reaktionsgefäß (102) aus Tantal oder Molybdän hergestellt ist, oder aus Eisen oder einer Eisenlegierung hergestellt ist, das bzw. die an der Innenfläche des Gefäßes (102) mit Tantal oder Molybdän überzogen ist.

6. Verfahren zum Rückgewinnen eines Seltenerdmetalls (12) aus einem Seltenerdmagneten (10), in dem
in einem Extraktionsschritt das Seltenerdmetall (12) aus einem Magneten (10) mit einem Seltenerdmetall (12) in geschmolzenes flüssiges Magnesium (21) extrahiert wird,
in einem Trennschritt der Magnet (10), aus dem das Seltenerdmetall (12) extrahiert wurde, und flüssiges Magnesium (21) mit dem darin aufgelösten Seltenerdmetall (12) getrennt werden,
in einem Seltenerd-Rückgewinnungsschritt das Seltenerdmetall (12) aus dem das getrennte Seltenerdmetall (12) enthaltenden flüssigen Magnesium (21) durch Verdampfen von Magnesium (22) rückgewonnen wird, und
in einem Magnesium-Rückgewinnungsschritt das verdampfte Magnesium (22) durch Kondensation, Verflüssigung oder Verfestigung rückgewonnen wird,
wobei der Extraktionsschritt durchgeführt wird, indem der Magnet (10) in einen Käfig (104) aus Eisen oder einer Eisenlegierung gelegt wird und der Käfig (104) so angeordnet wird, dass der gesamte Magnet (10) in geschmolzenes Magnesium (21) in dem Reaktionsgefäß (102) eingetaucht ist, und anschließend der Käfig (104) zu einer Position angehoben wird, die überhaupt nicht in Kontakt mit geschmolzenem Magnesium (21) mit dem darin aufgelösten Seltenerdmetall (12) ist, wodurch der Magnet (10), aus dem das Seltenerdmetall (12) extrahiert wurde, und das flüssige Magnesium (21) mit dem darin aufgelösten Seltenerdmetall (12) in dem Trennschritt getrennt werden.

7. Verfahren nach Anspruch 6, wobei das verdampfte Magnesium (22) in einem anderen Reaktionsgefäß (102), das einen anderen Magneten (10) enthält, durch Kondensation, Verflüssigung oder Verfestigung rückgewonnen wird und anschließend der Extraktionsschritt durchgeführt wird, wodurch kontinuierlich das Seltenerdmetall (12) aus dem Magneten (10) rückgewonnen wird.

8. Verfahren nach Anspruch 6 oder 7, wobei der Extraktionsschritt in einer Argon-Atmosphäre im Inneren eines Reaktionsgefäßes (102) durchgeführt wird, das aus Tantal oder Molybdän hergestellt ist, oder aus Eisen oder einer Eisenlegierung hergestellt ist, das bzw. die mit Tantal oder Molybdän an der Innenfläche des Gefäßes (102) überzogen ist.

9. Verfahren nach einem der Ansprüche 6 bis 8, wobei
die Seltenerdmetall-Extraktionsreaktion bei einer Temperatur von mindestens 650°C und höchstens 800°C durchgeführt wird, und/oder
der Trennschritt in einer Argon-Atmosphäre bei einer Temperatur von mindestens 650°C durchgeführt wird, und/oder
Magnesium bei einer Temperatur von mindestens 650°C und höchstens 930°C in dem Magnesium-Rückgewinnungsschritt und dem Seltenerdmetall-Rückgewinnungsschritt verdampft wird.

10. Verfahren nach einem der Ansprüche 6 bis 9, wobei Magnesium aus dem das getrennte Seltenerdmetall (12) enthaltenden flüssigen Magnesium (21) durch Evakuieren von der Seite eines anderen Gefäßes (102) verdampft wird, dasselbe zu dem anderen Gefäß (102) geleitet wird, Magnesium durch Kondensation, Verflüssigung oder Verfestigung rückgewonnen wird, und nur das Seltenerdmetall (12) in dem Reaktionsgefäß (102) verbleibt und dasselbe in dem Seltenerdmetall-Rückgewinnungsschritt und dem Magnesium-Rückgewinnungsschritt rückgewonnen wird.

11. Verfahren nach einem der Ansprüche 6 bis 10, wobei alle oben beschriebenen Schritte in zwei dicht verschlossenen Reaktionsgefäßen (102) aus Eisen oder einer Eisenlegierung durchgeführt werden, die miteinander durch eine Pipeline verbunden sind und ein An-Aus-Ventil (110) im Innern der Pipeline aufweisen.

12. Gerät (100) nach einem der Ansprüche 1 bis 5, wobei der Magnet (10) Eisen, Bor und ein Seltenerdmetall (12) enthält, und das Seltenerdmetall (12) Nd, Pr und/oder Dy enthält.

13. Verfahren nach einem der Ansprüche 6 bis 11, wobei der Magnet (10) Eisen, Bor und ein Seltenerdmetall (12) enthält, und das Seltenerdmetall (12) Nd, Pr und/oder Dy enthält.

14. Gerät (100) nach einem der Ansprüche 1 bis 5, wobei der Magnet (10) als Festkörper oder in Pulverform vorliegt.

15. Verfahren nach einem der Ansprüche 6 bis 11 und 13, wobei der Magnet (10) als Festkörper oder in Pulverform vorliegt.

## Revendications

1. Appareil (100) de récupération de métal des terres rares pour récupérer un métal (12) des terres rares à partir d'un aimant (10) de terres rares comprenant :
un premier récipient de réaction (102) pour extraire un métal (12) des terres rares à partir d'un aimant (10) ayant le métal (12) des terres rares en utilisant du magnésium fondu (21),
un premier récipient (101) pour recevoir le premier récipient de réaction (102),
une première unité de séparation pour séparer l'aimant (10) duquel le métal (12) des terres rares a été extrait et du magnésium liquide (21) ayant le métal (12) des terres rares dissous dans celui-ci,
un deuxième récipient de réaction (102) pour extraire un métal (12) des terres rares à partir d'un aimant (10) ayant le métal (12) des terres rares en utilisant du magnésium fondu (21),
un deuxième récipient (101) pour recevoir le deuxième récipient de réaction (102),
une deuxième unité de séparation pour séparer l'aimant (10) duquel l'élément des terres rares a été extrait et du magnésium liquide (21) ayant les éléments des terres rares dissous dans celui-ci, et
une unité de récupération d'élément des terres rares pour récupérer le métal (12) des terres rares à partir du magnésium liquide (21) contenant le métal (12) des terres rares séparé dans le premier récipient de réaction (102) ou le deuxième récipient de réaction (102), dans lequel
le magnésium évaporé (22) est transféré jusqu'à un autre récipient (102) différent du récipient qui reçoit le premier récipient de réaction (102) ou le deuxième récipient de réaction (102) qui contient le magnésium liquide (21) contenant les métaux des terres rares séparés, et condensé, liquéfié, ou solidifié dans le récipient (102) différent, récupérant ainsi le magnésium évaporé (22).

2. Appareil (100) de récupération de métal des terres rares selon la revendication 1, dans lequel la première unité de séparation, et la deuxième unité de séparation, est un mécanisme (105) pour déplacer verticalement une cage (104) constituée de fer ou d'un alliage de fer contenant l'aimant (10) entre une position où l'aimant (10) est complètement immergé dans le magnésium fondu (21) dans le premier récipient de réaction (102), ou le deuxième récipient de réaction (102), et une position où la cage (104) constituée de fer ou d'un alliage de fer n'est pas du tout immergée dans le magnésium fondu (21).

3. Appareil (100) de récupération de métal des terres rares selon la revendication 1 ou 2, dans lequel le premier récipient (101) et le deuxième récipient (101) sont connectés l'un à l'autre au moyen d'une canalisation, et un robinet marche/arrêt (110) est prévu dans l'intérieur de la canalisation.

4. Appareil (100) de récupération de métal des terres rares selon la revendication 3, dans lequel chacun du premier récipient (101) et du deuxième récipient (101) est un récipient étroitement fermé et ayant un mécanisme pour fournir une atmosphère d'argon ou une évacuation dans l'intérieur du premier récipient (101) et du deuxième récipient (101) séparément ou en même temps en ouvrant le robinet marche/arrêt (110).

5. Appareil (100) de récupération de métal des terres rares selon l'une quelconque des revendications 1 à 4, dans lequel
chacun du premier récipient (101) et du deuxième récipient (101) est constitué de fer ou d'un alliage de fer, et/ou
chacun du premier récipient de réaction (102) et du deuxième récipient de réaction (102) est constitué de tantale ou de molybdène, ou constitué de fer ou d'un alliage de fer revêtu avec du tantale ou du molybdène au niveau de la surface intérieure du récipient (102).

6. Procédé de récupération d'un métal (12) des terres rares à partir d'un aimant (10) de terres rares comprenant :
une étape d'extraction pour extraire le métal (12) des terres rares à partir d'un aimant (10) ayant un métal (12) des terres rares dans du magnésium fondu liquide (21),
une étape de séparation pour séparer l'aimant (10) duquel le métal (12) des terres rares a été extrait et le magnésium liquide (21) ayant le métal (12) des terres rares dissous dans celui-ci,
une étape de récupération de métal des terres rares pour récupérer le métal (12) des terres rares à partir du magnésium liquide (21) contenant le métal (12) des terres rares séparé par évaporation de magnésium (22), et
une étape de récupération de magnésium pour récupérer le magnésium évaporé (22) par condensation, liquéfaction, ou solidification,
dans lequel l'étape d'extraction est mise en oeuvre en plaçant l'aimant (10) dans une cage (104) constitué de fer ou d'un alliage de fer et en positionnant la cage (104) de telle manière que la totalité de l'aimant (10) est immergé dans le magnésium fondu (21) dans le récipient de réaction (102) et, ensuite, en élevant la cage (104) jusqu'à une position totalement sans contact avec le magnésium fondu (21) ayant le métal (12) des terres rares dissous dans celui-ci, séparant ainsi l'aimant (10) duquel le métal (12) des terres rares a été extrait et le magnésium liquide (21) ayant le métal (12) des terres rares dissous dans celui-ci à l'étape de séparation.

7. Procédé selon la revendication 6, dans lequel le magnésium évaporé (22) est récupéré dans un autre récipient de réaction (102) contenant un autre aimant (10) par condensation, liquéfaction, ou solidification et, successivement, l'étape d'extraction est mise en oeuvre, récupérant ainsi de façon continue le métal (12) des terres rares à partir de l'aimant (10).

8. Procédé selon la revendication 6 ou 7, dans lequel l'étape d'extraction est mise en oeuvre dans une atmosphère d'argon dans l'intérieur d'un récipient de réaction (102) constitué de tantale ou de molybdène ou constitué de fer ou d'un alliage de fer revêtu avec du tantale ou du molybdène au niveau de la surface intérieure du récipient (102).

9. Procédé selon l'une quelconque des revendications 6 à 8, dans lequel
la réaction d'extraction de métal des terres rares est mise en oeuvre à une température de 650°C ou plus et 800°C ou moins, et/ou
l'étape de séparation est mise en oeuvre dans une atmosphère d'argon à une température de 650°C ou plus, et/ou
le magnésium est évaporé à une température de 650°C ou plus et 930°C ou moins à l'étape de récupération de magnésium et à l'étape de récupération de métal des terres rares.

10. Procédé selon l'une quelconque des revendications 6 à 9, dans lequel le magnésium est évaporé à partir du magnésium liquide (21) contenant le métal (12) des terres rares séparé par évacuation depuis le côté d'un autre récipient (102), transfert de celui-ci jusqu'à l'autre récipient (102), récupération du magnésium par condensation, liquéfaction, ou solidification, et en ne laissant que le métal (12) des terres rares dans le récipient de réaction (102), et en récupérant ceux-ci à l'étape de récupération de métal des terres rares et à l'étape de récupération de magnésium.

11. Procédé selon l'une quelconque des revendications 6 à 10, dans lequel toutes les étapes décrites ci-dessus sont mises en oeuvre dans deux récipients de réaction (102) étroitement fermés constitués de fer ou d'une alliage de fer connectés l'un à l'autre au moyen d'une canalisation et ayant un robinet marche/arrêt (110) dans l'intérieur de la canalisation.

12. Appareil (100) selon l'une quelconque des revendications 1 à 5, dans lequel l'aimant (10) contient du fer, du bore, et un métal (12) des terres rares, et
le métal (12) des terres rares contient au moins un parmi Nd, Pr, et Dy.

13. Procédé selon l'une quelconque des revendications 6-11, dans lequel l'aimant (10) contient du fer, du bore, et un métal (12) des terres rares, et le métal (12) des terres rares contient au moins un parmi Nd, Pr, et Dy.

14. Appareil (100) selon l'une quelconque des revendications 1 à 5, dans lequel l'aimant (10) est sous une forme solide ou pulvérulente.

15. Procédé selon l'une quelconque des revendications 6-11 et 13, dans lequel l'aimant (10) est sous une forme solide ou pulvérulente.
